# FASCICULE DE BREVET EUROPEEN

(11) **EP 1 017 967 B1**
(45) Date de publication et mention de la délivrance du brevet: **01.03.2006**
(21) Numéro de dépôt: 98945377.4
(22) Date de dépôt: 25.09.1998
(51) Int. Cl.: G01D 5/245

(54) **CAPTEUR NUMERIQUE DE POSITION RELATIVE**
DIGITALER GEBER ZUR MESSUNG EINER RELATIVEN POSITION
DIGITAL RELATIVE POSITION SENSOR

(30) Priorité: 26.09.1997 FR 9712034
(43) Date de publication de la demande: 12.07.2000
(73) Titulaire: SNR ROULEMENTS, 74010 Annecy Cédex (FR)
(72) Inventeur: TRAVOSTINO, Francis, F-74330 Poisy (FR); SANTOS, A., John, Farmington, CT 06032 (US); LACROIX, Mark, E., New Hartford, CT 06057 (US); LYLE, Stephen, J., Torrington, CT 06790 (US)
(74) Mandataire: Srour, Elie
(86) Numéro de dépôt international: PCT/FR1998/002061
(87) Numéro de publication internationale: WO 1999/017082

(56) Documents cités:
- EP-A- 0 098 551
- EP-A- 0 469 318
- EP-A- 0 871 014
- US-A- 4 262 526

## Description

L'invention se rapporte à un capteur numérique de position relative, de type magnétique, délivrant une impulsion de référence par tour, plus particulièrement utilisé dans les roulements capteurs pour des applications automobiles ou industrielles. Un tel capteur peut être monté dans des roulements de roue ou dans des roulements de colonne de direction de véhicules automobiles pour renseigner les systèmes de navigation ou pour contrôler la trajectoire du véhicule, ou bien encore dans des systèmes de contrôle et de pilotage de la position d'un robot ou d'un moteur électrique par exemple.

Un capteur de position relative qui délivre en plus un signal de sortie, dit "top tour", constitué par une seule impulsion par tour, dont la longueur ou la durée peut varier en fonction des dispositifs, est très intéressant car ce signal peut être utilisé comme référence pour effectuer des réinitialisations des systèmes de traitement connectés en aval au capteur, et connaître par comptage/décomptage la position d'un rotor par rapport à cette position de référence.

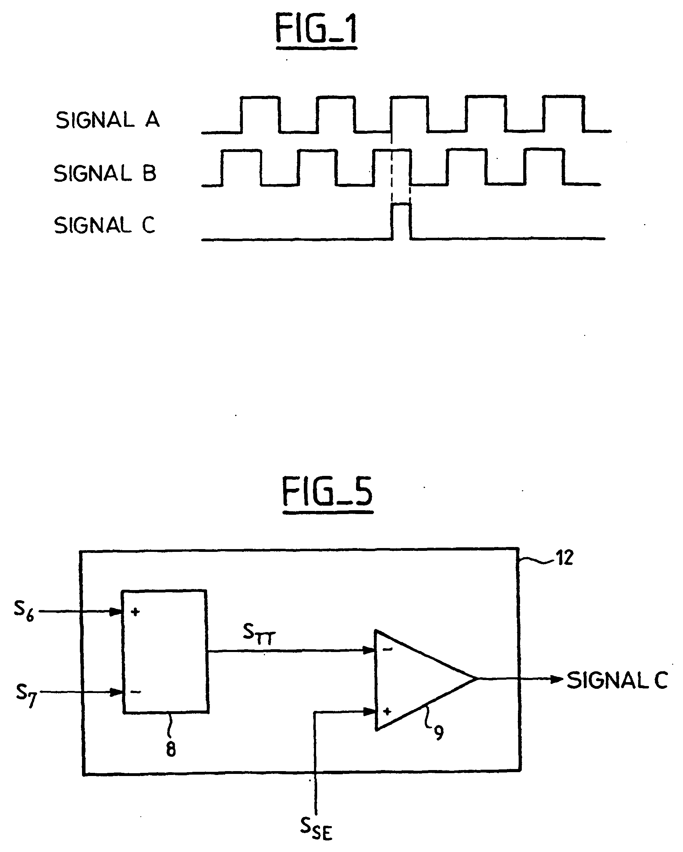

Il existe actuellement des capteurs de position relative de type codeur optique, qui délivrent en sortie des signaux digitaux, possédant chacun un nombre d'impulsions déterminé par tour et déphasés de 90° électrique l'un par rapport à l'autre afin de discriminer le sens de rotation. De tels signaux sont représentés sur la figure 1, où ils sont référencés A et B ainsi qu'un signal C de référence "top tour", constitué d'une seule impulsion par tour, dont le front montant correspond à un front quelconque d'un des deux signaux A ou B, mais dont le front descendant correspond au front suivant de l'autre signal.

Pour des raisons de fiabilité, l'utilisation de ces capteurs de type optique est limitée à des applications réalisées dans des ambiances peu sévères, présentant un faible niveau de pollution et une température ambiante inférieure à 100°C.

Il existe également des capteurs de type magnétique qui peuvent fonctionner dans des conditions industrielles plus sévères et qui sont économiquement avantageux. Ils peuvent être constitués d'une part d'un anneau magnétique multipolaire, sur lequel est imprimée une succession de pôles Nord et Sud et qui est lié à la partie mobile de l'organe en rotation dont on cherche la position relative, et d'autre part d'un ou plusieurs capteurs magnétiques liés à la partie fixe dudit organe. Ces capteurs magnétiques sont par exemple des sondes à effet Hall ou des sondes magnétorésistives qui peuvent être intégrées dans des roulements.

Par contre, dans le cas où un tel capteur de position relative, de type magnétique, doit délivrer une information de référence "top tour", les pistes magnétiques, principale et "top tour", doivent être suffisamment écartées l'une de l'autre en raison des fortes influences magnétiques s'exerçant entre elles, ce qui provoque un important encombrement. Ce qui est particulièrement vrai si on souhaite utiliser les signaux issus de la piste principale pour augmenter électroniquement la résolution des signaux de sortie par des procédés d'interpolation connus. Cet inconvénient peut empêcher le montage d'un tel capteur dans certains organes, où la place est réduite.

L'invention vise à pallier ces inconvénients en proposant un capteur de position relative capable de générer un signal de référence "top tour", de dimensions réduites et capables de s'affranchir des diverses tolérances d'assemblage des éléments capteurs magnétiques face aux anneaux magnétiques multipolaires solidaires en rotation des organes tournants.

Pour cela, l'objet de l'invention est un capteur numérique de position relative, comprenant d'une part un anneau magnétique multipolaire circulaire, sur lequel sont aimantées une pluralité de paires de pôles Nord et Sud, équirépartis, de largeur angulaire déterminée constante, mobile en rotation en face d'un capteur magnétique fixe composé d'au moins deux éléments sensibles, situés sur un même rayon de l'anneau et distants d'une longueur d, respectivement positionnés en regard de la piste principale et de la piste de référence "top tour", et d'autre part d'un dispositif de traitement des signaux de sortie émis par les éléments sensibles, destiné à donner une impulsion de référence par tour d'un organe en rotation solidaire de l'anneau multipolaire, caractérisé en ce que, sur l'anneau multipolaire, est réalisé un motif magnétique à partir d'une paire de pôles Nord et Sud dont la transition est différente de la transition entre chaque pôle Nord et Sud de l'anneau, et dont la largeur angulaire du pôle Nord est d'une part égale à celle du pôle Sud au niveau de la piste principale et d'autre part différente au niveau de la piste de référence "top tour".

Selon une autre caractéristique de l'invention, le capteur magnétique est composé de trois éléments sensibles dont le premier est situé en regard de la piste de référence "top tour", et dont les deux autres sont situés en regard de la piste magnétique principale de telle sorte que l'un des deux est situé sur le même rayon de l'anneau magnétique que l'élément sensible de la piste de référence à une distance d, et qu'ils sont décalés l'un par rapport à l'autre le long de la piste principale afin de délivrer des signaux respectifs en quadrature.

Selon une autre caractéristique de l'invention, le capteur magnétique est composé de deux barrettes d'éléments magnétiques sensibles, situées en regard des deux pistes magnétiques principale et de référence "top tour", sont parallèles et distantes d'une longueur d, et sont composées d'une pluralité d'éléments sensibles, de préférence en nombre pair et égal pour les deux barrettes, chaque élément sensible d'une barrette étant situé, en regard d'un élément sensible de l'autre barrette.

L'invention sera avantageusement utilisée dans des roulements capteurs pour des applications automobiles telles que la navigation et le contrôle de trajectoire, par l'intermédiaire des roulements de roue ou de colonne de direction, ou pour des applications industrielles lorsqu'il faut contrôler et piloter la position d'un organe, un moteur électrique par exemple.

D'autres caractéristiques et avantages de l'invention apparaîtront à la lecture de la description suivante, de plusieurs exemples de réalisation non limitatifs, illustrée par les figures suivantes qui sont :
- la figure 1 : une représentation graphique des signaux de sortie d'un capteur numérique de position relative avec impulsion de référence "top tour" ;
- les figures 2, 7, 10 : une portion d'un capteur numérique selon l'invention, suivant une vue de face de différents modes de réalisation;
- les figures 3ₐ et 3_{b} : une représentation graphique des profils de champ magnétique observés le long d'un rayon d'un codeur magnétique multipolaire ;
- les figures 4ₐ à 4ⱼ : différents motifs magnétiques d'un capteur numérique selon l'invention ;
- les figures 5, 8, 11 : un schéma électronique de différents modes de réalisation du dispositif de traitement des signaux du capteur numérique selon l'invention ;
- les figures 6, 9, 12 : une représentation graphique des signaux électriques disponibles dans le dispositif de traitement du capteur numérique selon l'invention ;
- les figures 13 à 15 : différents signaux électriques analogiques caractéristiques du dispositif de traitement des différents capteurs digitaux selon l'invention.
Les éléments portant les mêmes références, sur les différentes figures, remplissent les mêmes fonctions en vue des mêmes résultats.

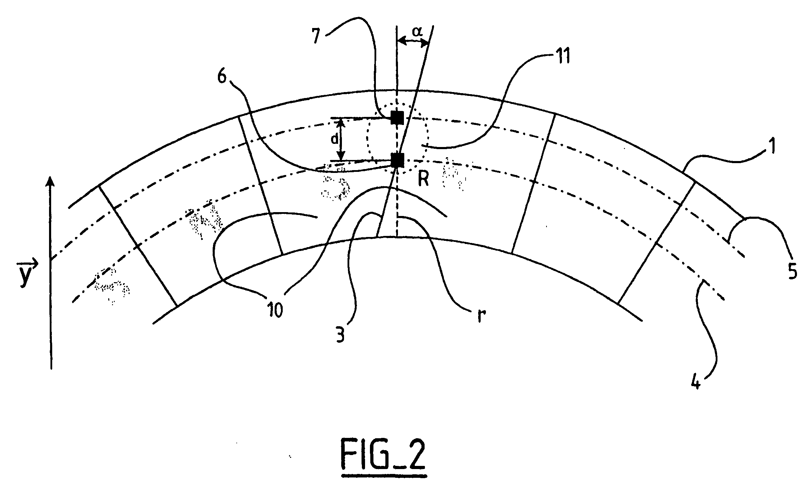

Le capteur numérique de position relative, objet de l'invention, est réalisé à partir d'un anneau magnétique multipolaire, circulaire, solidaire de la partie mobile d'un organe dont on mesure la position angulaire relative, de telle sorte qu'il soit entraîné en rotation en même temps que lui.
Comme le montre la figure 2, cet anneau magnétique 1. comporte, sur une de ses faces, une pluralité de pôles Nord et Sud, équirépartis, se succédant de telle sorte qu'un pôle Nord, respectivement Sud, soit toujours entouré de deux pôles Sud, respectivement Nord. La largeur angulaire moyenne des pôles Nord et Sud reste constante.

Le capteur numérique comprend également au moins deux éléments 6 et 7 sensibles, distants d'une longueur d suivant un rayon r, et respectivement positionnés en regard de la piste principale 4 et de la piste de référence "top tour" 5. L'élément sensible 6 du dispositif capteur magnétique 11 lit le champ magnétique émis par la piste magnétique principale 4, tandis que, simultanément, l'élément sensible 7 lit le champ magnétique émis par la piste de référence 5.

Selon une caractéristique fondamentale de l'invention, l'anneau magnétique 1 comporte un motif magnétique spécifique 10, constitué de deux pôles adjacents, Nord et Sud, séparés par une transition magnétique de forme particulière, différente de la transition radiale théorique entre les autres pôles de l'anneau, de telle sorte que la largeur angulaire des pôles Nord et Sud du motif angulaire, au niveau de la piste de référence "top tour" 5, soit différente de celles des autres pôles.

Dans un premier mode de réalisation, correspondant au cas particulier de la figure 2, où la piste magnétique principale 4 est un cercle divisant l'anneau magnétique 1 en deux parties d'égales largeurs, la transition magnétique 3 entre les deux pôles Nord et Sud du motif spécifique 10, se fait suivant un segment de droite, incliné d'un angle α par rapport à la direction des transitions entre les pôles Nord et Sud des autres paires de l'anneau, ici confondue avec un rayon r de l'anneau, en pointillés, le centre R de la rotation d'angle α se trouvant sur la piste principale 4. Le second élément sensible 7 du dispositif capteur magnétique 11 est situé sur un cercle de diamètre différent, en l'occurrence supérieur à celui de la piste principale 4, de sorte que le champ magnétique qu'il lit sur cette piste de référence présente une particularité au niveau du motif magnétique 10 dont les deux pôles Nord et Sud sont de largeurs différentes.

Dans le cas d'un anneau dont la surface cylindrique extérieure est aimantée réalisant un codeur magnétique multipolaire linéaire, sur lequel les transitions entre les pôles sont confondues avec des directrices de la couronne cylindrique extérieure, le motif présente une transition inclinée d'un angle α par rapport à la transition entre les autres pôles.

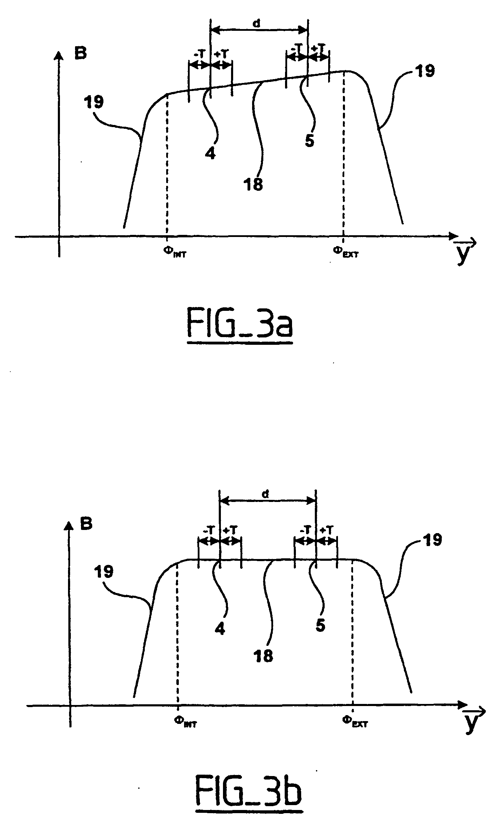

Les figures 3ₐ et 3_{b} montrent un relevé typique du champ magnétique B disponible suivant une direction y passant par un rayon de l'anneau magnétique multipolaire 1, de préférence au centre d'un pôle, respectivement dans le cas d'un anneau dont une des faces est aimantée et dans le cas d'un anneau linéaire. Les deux courbes présentent chacune un plateau 18 au-dessus du matériau magnétique aimanté, entre les diamètres intérieur Φ_{INT} et extérieur Φ_{EXT}, et des décroissances 19 dès que l'on se rapproche du bord de la partie aimantée. Soit d, la distance entre les éléments sensibles, placés au-dessus des deux pistes magnétiques 4 et 5, et soit 2T, les tolérances mécaniques de positionnement suivant la direction d'un rayon y du capteur 11 par rapport aux pistes 4 et 5, pour s'affranchir des tolérances de montage suivant ce rayon y, il faut que la longueur du plateau 18 soit égale au moins à d+2T de façon à obtenir un champ magnétique utile constant et un bon fonctionnement du traitement spécifique "top tour".

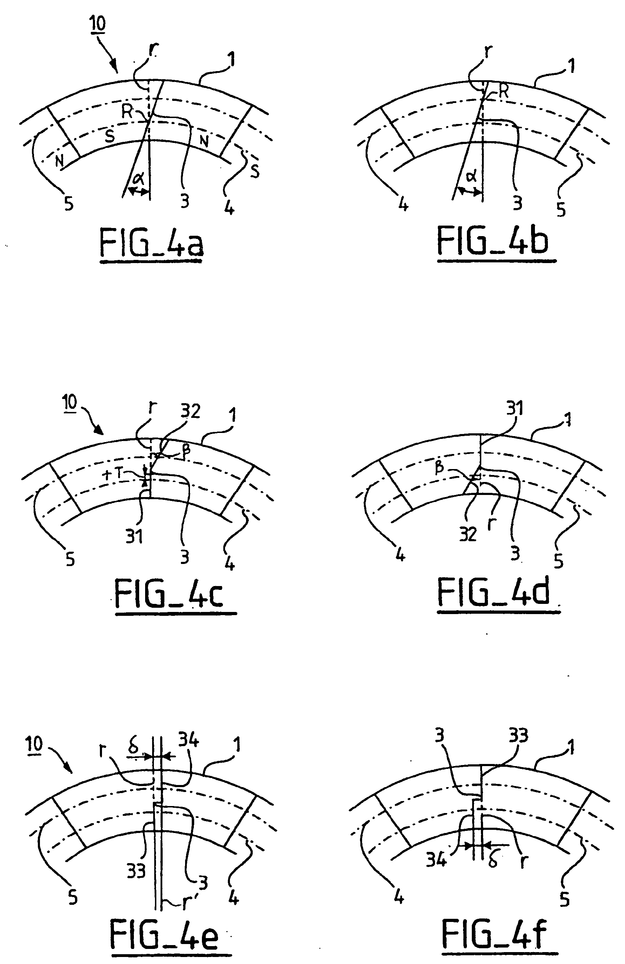

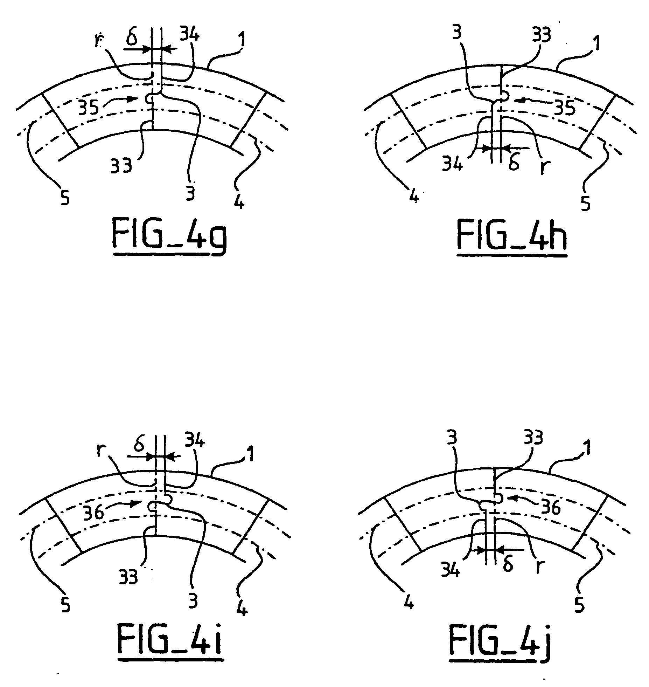

Les figures 4ₐ et 4_{b} représentent un motif magnétique 10 réalisé sur un anneau multipolaire 1, dont la piste principale n'est pas centrée au milieu mais décalée vers le diamètre intérieur et vers le diamètre extérieur respectivement. La transition se fait comme celle de la figure 2, c'est-à-dire suivant un segment de droite obtenu par rotation d'un rayon r d'angle α et de centre R situé sur la piste principale 4. Cette conception permet d'optimiser la largeur de l'anneau magnétique, en réduisant sa largeur par exemple.

Les figures 4_{c} et 4_{d} représentent un deuxième mode de réalisation d'un motif magnétique, dont la transition spécifique 3 est composée de deux segments de droite, un premier segment 31 selon un rayon r de l'anneau magnétique 1 qui divise le motif en deux parties égales pour conserver une largeur de pôle angulaire constante au niveau de la piste principale 4 ainsi qu'au niveau des diamètres adjacents situés à ± 2T, et un second segment 32 incliné d'un angle β par rapport au premier segment au niveau de la piste de référence 5.

Sur les figures 4ₑ et 4_{f}, la transition magnétique 3 entre les deux pôles Nord et Sud du motif 10 est composée d'un premier segment de droite 33, qui est confondu avec un rayon r de l'anneau magnétique 1 divisant le motif 10 en deux parties égales, selon la transition classique au niveau de la piste principale 4 et des diamètres adjacents à ±2T, et d'un second segment de droite 34, qui est confondu avec un rayon r', décalé d'un angle 6 par rapport au rayon r. Ce second segment de droite divise le motif 10 en deux parties inégales mais conserve une largeur de pôle angulaire constante au niveau de la piste de référence 5 et des diamètres adjacents à ±2T, lors du traitement électronique du signal de référence "top tour", que l'anneau magnétique multipolaire 1 soit aimanté sur une face plane ou sur sa couronne cylindrique extérieure.

Une variante de la transition précédente est représentée sur les figures 4_{g} et 4ₕ, pour lesquelles les segments de droite 33 et 34, situés au niveau des deux pistes magnétiques 4 et 5, sont reliées au niveau du milieu de l'anneau multipolaire par une boucle 35 destinée à atténuer les influences magnétiques entre les pistes.

Une autre variante du même type de transition est représentée sur les figures 4ᵢ et 4ⱼ, pour lesquels les segments de droite 33 et 34 sont reliés par une boucle 36 en forme de S au niveau du milieu de l'anneau.

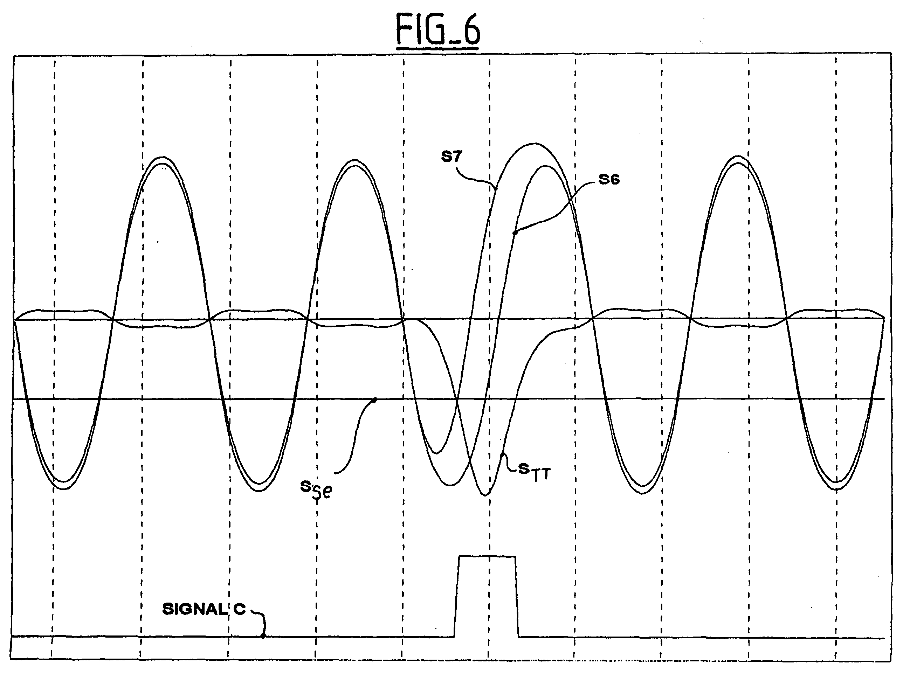

Les deux éléments sensibles 6 et 7 du dispositif capteur magnétique 11 délivrent respectivement les signaux électriques S₆ et S₇, dont le traitement électronique par un dispositif spécifique 12 permet d'obtenir un signal de référence "top tour" C, représenté sur la figure 5. Ce dispositif 12 de génération d'une impulsion de référence est constitué tout d'abord par un circuit différentiateur 8, effectuant la différence analogique entre les signaux d'entrée S₆ et S₇, pour délivrer un signal analogique de référence "top tour" S_{TT}. Le dispositif 12 est ensuite constitué par un circuit comparateur 9, destiné à comparer ledit signal analogique de référence S_{TT} à un seuil fixe de référence S_{SE}, qui est choisi compris entre les limites supérieure et inférieure du signal S_{TT}, quelle que soit la température de fonctionnement. Ainsi, l'amplitude du signal analogique de référence S_{TT} est pondérée d'une part par un premier facteur de fonctionnement aux hautes températures, qui la diminue au niveau de la transition entre les pôles Nord et Sud du motif magnétique 10, et d'autre part par un second facteur de fonctionnement aux basses températures, qui l'augmente en dehors du motif. En sortie du comparateur 9, est généré un signal numérique C de référence "top tour", qui sert d'impulsion de référence, que les signaux électriques S₆, S₇, S_{TT} et S_{SE} soient des tensions ou des courants.
Ces différents signaux sont représentés graphiquement sur la figure 6, pour la portion de l'anneau magnétique multipolaire 1 considérée sur la figure 2.

Pour s'affranchir de l'influence des variations de température d'une part et d'entrefer d'autre part, l'entrefer étant la distance entre la surface de l'anneau magnétique multipolaire 1 et les éléments sensibles du capteur magnétique 11, l'invention propose un traitement électronique des signaux émis par les éléments sensibles du capteur 11 qui soit ratiométrique par rapport à un autre signal dont l'amplitude varie parallèlement à la leur. En effet, le champ magnétique ainsi que la sensibilité des capteurs magnétiques décroissent notablement lorsque la température augmente, de même que le champ magnétique décroît également quand l'entrefer croit. Aussi est-il intéressant de prendre en compte la conjonction de ces deux phénomènes physiques.

Selon une première variante de réalisation du capteur magnétique 11, faisant partie du capteur numérique de position relative selon l'invention, ce capteur magnétique 11 est composé de trois éléments sensibles, dont le premier 7 est situé en regard de la piste de référence 5 comme précédemment et dont les deux autres 61 et 62 sont situés en regard de la piste magnétique principale 4 pour lire le champ magnétique émis par l'anneau magnétique multipolaire 1.

Ces éléments sensibles 61 et 62, dont l'un d'eux est situé sur le même rayon de l'anneau magnétique que l'élément sensible de la piste de référence, sont décalés l'un par rapport à l'autre le long de la piste principale 4 de telle sorte que, lorsqu'un de ces éléments, 61 par exemple, est situé en face d'une transition magnétique entre deux pôles Nord et Sud, l'autre élément, 62 dans ce cas, est situé au milieu d'un pôle magnétique, autrement dit qu'ils soient en quadrature.

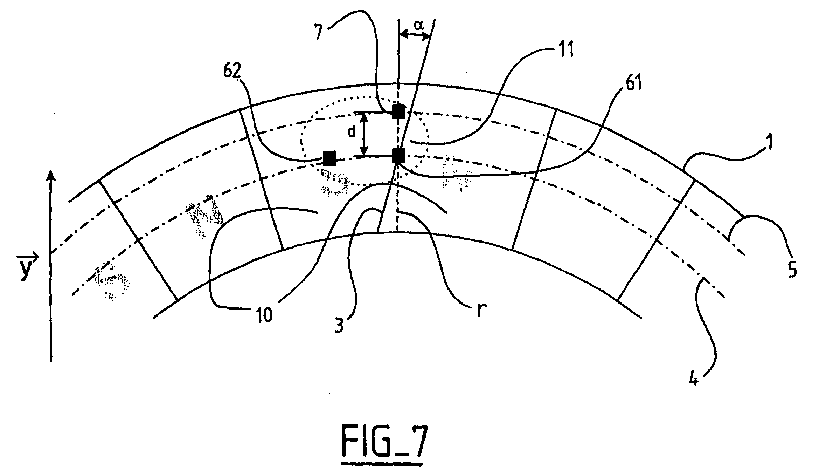

Dans le cas de la figure 7, les deux éléments sensibles 61 et 62 de la piste principale 4 apparaissent au-dessus du même pôle Sud, mais l'anneau étant en rotation, ils peuvent se trouver au-dessus de deux pôles distincts.

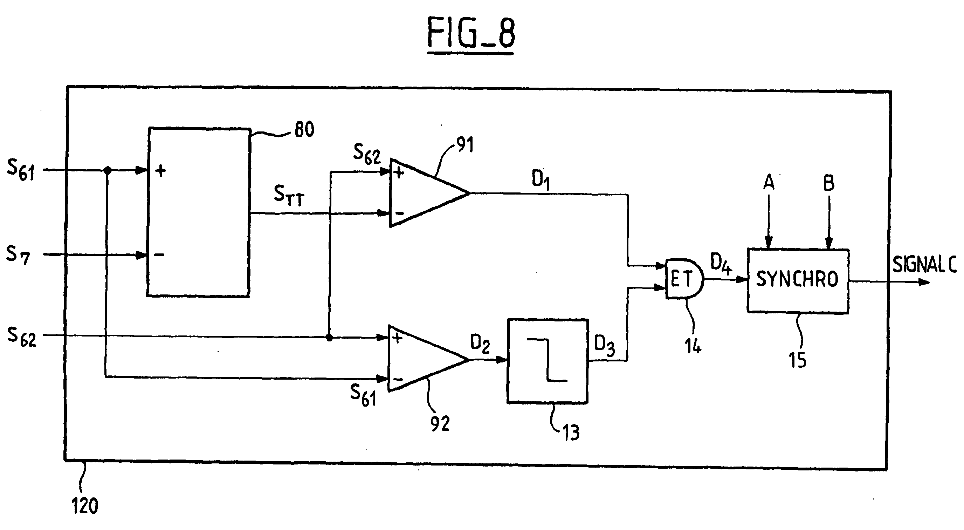

Le traitement électronique des signaux S₆₁, S₆₂ et S₇, émis en sortie du capteur magnétique 11, est réalisé par un dispositif 120 de génération d'une impulsion de référence C, qui comprend, comme le montre la figure 8, tout d'abord un circuit différentiateur 80, destiné à effectuer la différence analogique entre le signal S₆₁ émis par l'élément capteur de la piste principale 4 et le signal S₇ émis par l'élément capteur 7 de la piste de référence 5 situé sur le même rayon de l'anneau 1 que lui. Il en résulte un signal analogique S_{TT} de référence "top tour". Le dispositif 120 comprend ensuite deux circuits comparateurs 91 et 92. Le premier comparateur 91 compare le signal S₆₂ de l'élément sensible 62 en quadrature avec l'élément 61, avec le signal analogique "top tour" S_{TT}, pour délivrer un signal numérique D₁ qui est à l'état logique 1 quand le signal S₆₂ est supérieur au signal S_{TT} et à l'état 0 inversement, et le second comparateur 92 compare ce même signal S₆₂ avec le signal S₆₁ émis par l'autre élément sensible 61, pour délivrer un signal numérique D₂, qui est à l'état logique 1 quand le signal S₆₂ est supérieur au signal S₆₁ et à l'état 0 inversement. Le comparateur 92 est relié à un détecteur de front descendant 13, dont le signal D₃ de sortie génère une impulsion à chaque front descendant de signal logique D₂. Puis, les signaux binaires D₁ et D₃ entrent dans une porte logique ET 14, pour générer un signal numérique D₄ constitué d'une impulsion unique 16 par tour de l'anneau magnétique multipolaire 1.

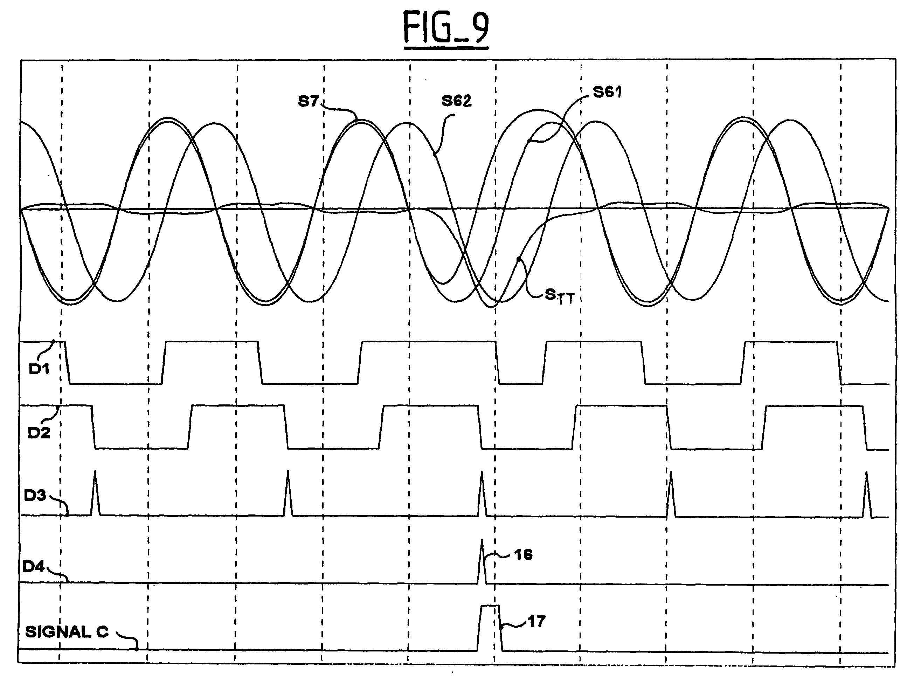

L'ensemble de ces signaux décrits est représenté graphiquement sur la figure 9.

Cette impulsion unique 16, qui n'apparaît qu'une fois par tour et toujours à la même position par rapport à l'anneau magnétique 1, sert de front montant à l'impulsion de référence 17 du signal binaire c "top tour", dont la durée de l'état haut est ajustée par rapport au signal de sortie désiré par un circuit de synchronisation 15, recevant en entrée le signal numérique D₄ ainsi que les signaux A et B. Ce mode de réalisation du dispositif 120 de génération est un exemple non limitatif.

Selon une deuxième variante de réalisation des éléments sensibles de l'invention, le capteur numérique de position relative comprend deux barrettes d'éléments magnétiques sensibles 20 et 21, destinées à l'affranchir d'une part d'un positionnement précis entre deux éléments consécutifs situés en regard de la piste magnétique principale 4, et d'autre part d'une prise en compte des différentes largeurs angulaires possibles des pôles Nord et Sud.

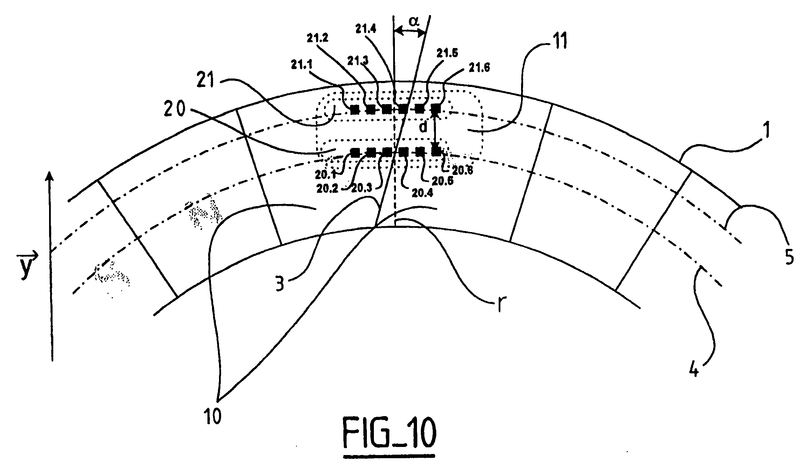

Comme le montre la figure 10, les barrettes 20 et 21, situées en regard des deux pistes magnétiques principale 4 et "top tour" 5, sont parallèles et distantes d'une longueur d, et sont composées d'une pluralité d'éléments sensibles 20ᵢ et 21ᵢ respectifs, i étant un nombre entier positif, de préférence pair et égal pour les deux barrettes, chaque élément sensible d'une barrette étant situé en regard d'un élément sensible de l'autre barrette.

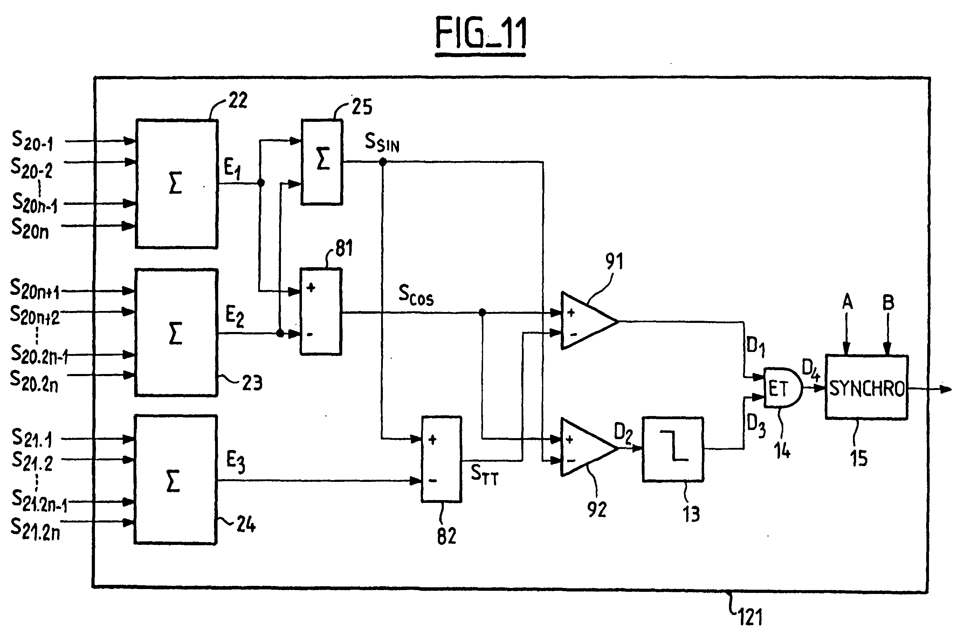

Le dispositif 121 de génération d'un signal de référence "top tour" C comporte, selon la figure 11, des moyens de sommation analogique 22 de la première moitié des signaux issus de la barrette 20, référencés. S₂₀₍₁₎ à S₂₀₍ₙ₎ pour délivrer un signal analogique E₁, puis des moyens de sommation analogique 23 de la seconde moitié des signaux issus de cette même barrette 20, référencés S₂₀₍ₙ₊₁₎ à S₂₀₍₂ₙ₎ pour délivrer un autre signal analogique E₂, et enfin des moyens de sommation analogique 24 des signaux issus de la seconde barrette 21 qui délivrent un troisième signal analogique E₃. Le dispositif 121 comporte ensuite un circuit de sommation analogique 25 des signaux E₁ et E₂, issus des sommateurs 22 et 23, qui délivre un signal analogique S_{SIN}, puis deux circuits différentiateurs analogiques 81 et 82, dont l'un 81 effectue la différence des signaux E₁ et E₂ issus des sommateurs 22 et 23 pour délivrer un signal analogique S_{COS} et dont l'autre 82 effectue la différence entre le signal S_{SIN} et le signal E₃ issus respectivement des sommateurs 25 et 24. Le signal de sortie du circuit différentiateur 82 est le signal analogique S_{TT} de référence "top tour".

Comme pour la variante de réalisation précédente, le dispositif 121 de génération comprend ensuite deux comparateurs, dont l'un 93 compare le signal S_{COS} issu du différentiateur avec le signal analogique "top tour" S_{TT} pour délivrer un signal numérique D₁ qui est à l'état logique 1 quand le signal S_{COS} est supérieur à S_{TT} et à l'état 0 inversement, et dont l'autre 94 compare ce même signal S_{COS} avec le signal S_{SIN} issu du sommateur 25 pour délivrer un signal numérique D₂, égal à 1 quand le signal S_{COS} est supérieur à S_{SIN} et égal à 0 inversement. Le comparateur 94 est relié à un détecteur de front descendant 13, dont le signal de sortie D₃ génère une impulsion à chaque front descendant du signal logique D₂. Une porte logique ET 14, recevant les signaux binaires D₁ et D₃, génère un signal numérique D₄ sous forme d'une impulsion unique 16 par tour de l'anneau magnétique 1.

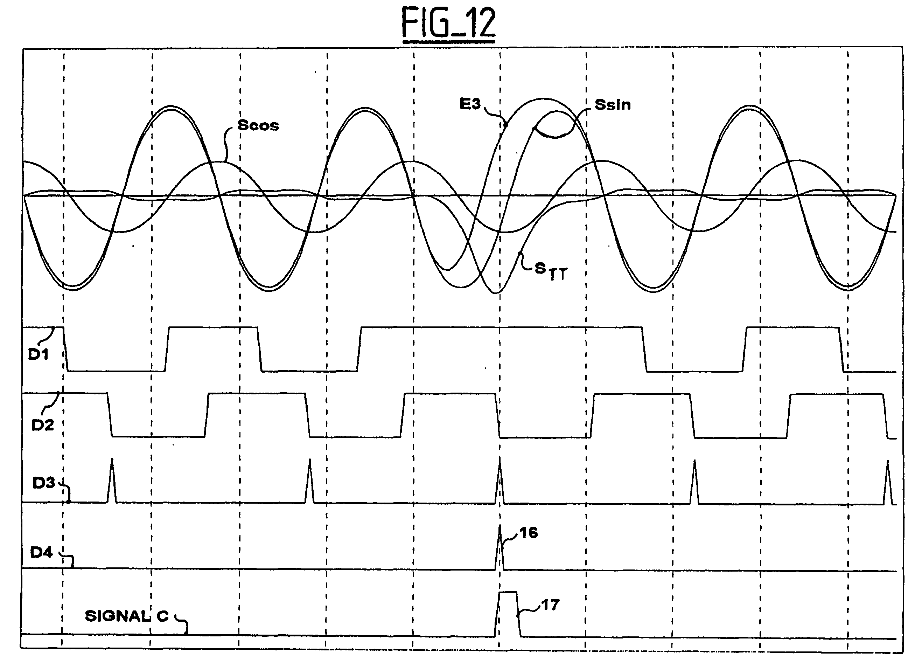

Un circuit de synchronisation 15 reçoit cette impulsion unique par tour, ainsi que les signaux A et B, pour ajuster la longueur de l'état haut de l'impulsion de référence 17 du signal de sortie "top tour" C par rapport au signal de sortie désiré. La figure 12 est une représentation graphique des différents signaux obtenus au cours du traitement électronique des signaux issus des barrettes d'éléments capteurs magnétiques.

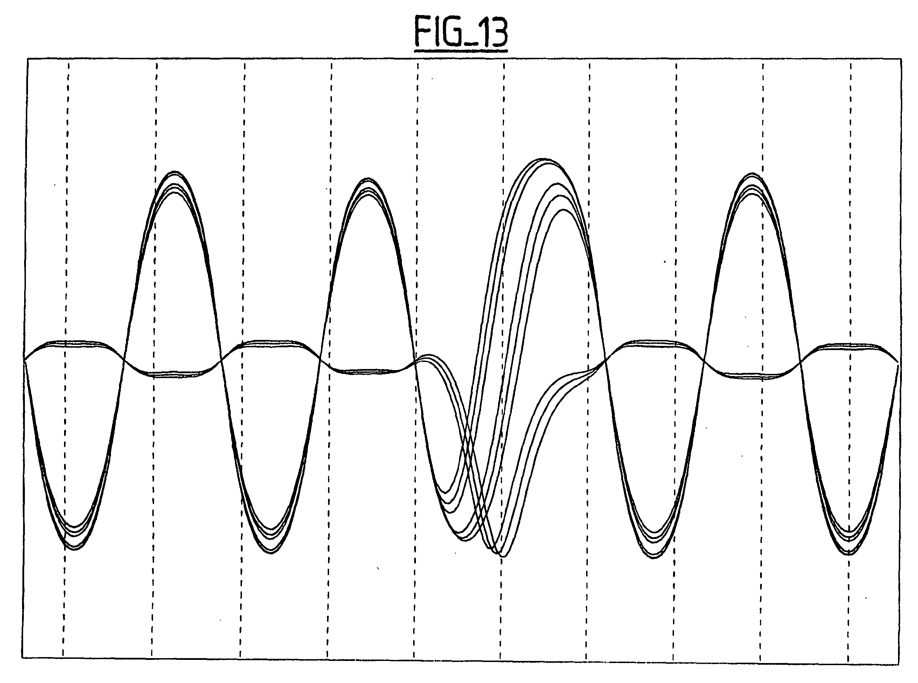

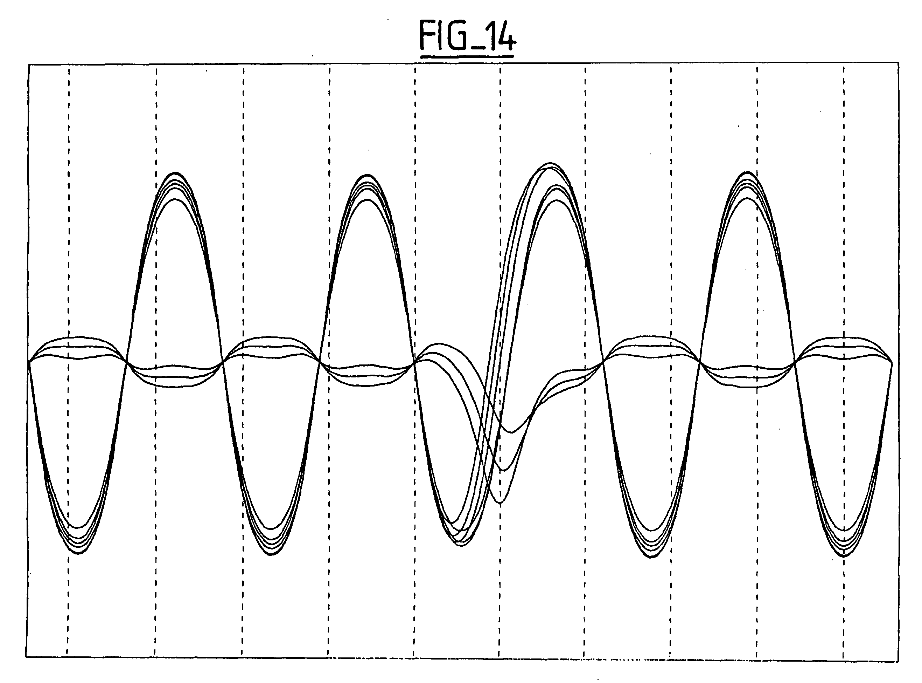

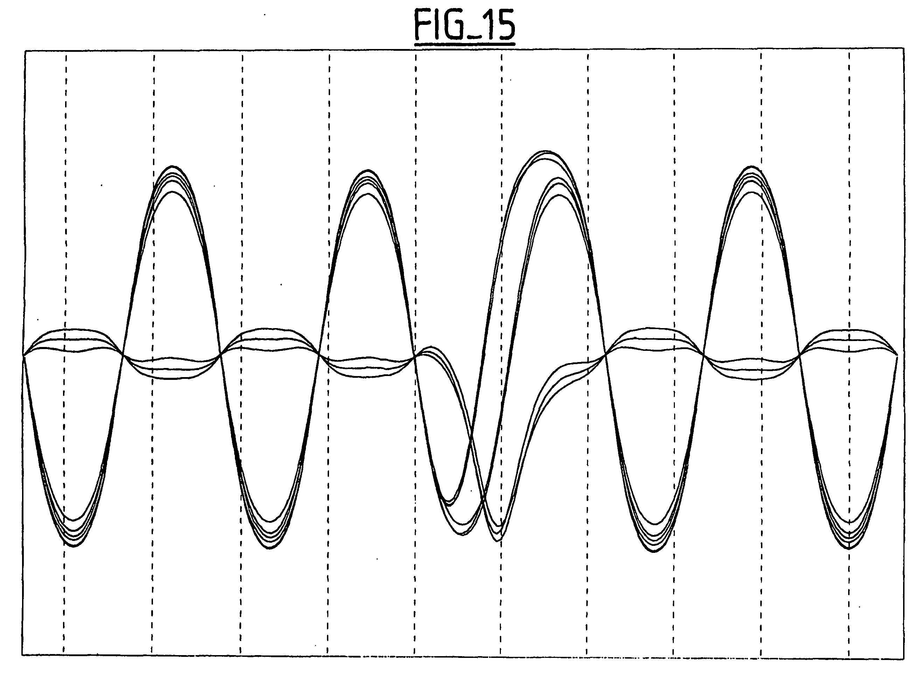

Les figures 13, 14 et 15 sont les représentations graphiques des signaux électriques E₃, S_{SIN} et du signal de référence "top tour" S_{TT}, précédemment décrits, et leurs équivalents sur les diamètres à + ou - 2T, relatifs aux figures 4a à 4b, 4c à 4d et 4e à 4j.

Les éléments sensibles du capteur 6, 7, 61 et 62 comme les barrettes 20 et 21 peuvent être du type sonde à effet Hall, ou sonde magnétorésistive amorphe ou sonde magnétorésistive géante.

## Revendications

1. Capteur numérique de position relative, comprenant d'une part un anneau magnétique multipolaire circulaire sur lequel sont aimantées une pluralité de paires de pôles Nord et Sud, équirépartis, de largeur angulaire déterminée constante, mobile en rotation en face d'un capteur magnétique fixe composé d'au moins deux éléments sensibles, situés sur un même rayon de l'anneau et distants d'une longueur (d), respectivement positionnés en regard d'une piste principale et d'une piste de référence "top tour", et d'autre part d'un dispositif de traitement des signaux de sortie émis par les éléments sensibles, destiné à donner une impulsion de référence par tour d'un organe en rotation solidaire de l'anneau multipolaire, **caractérisé en ce que**, sur l'anneau multipolaire (1), est réalisé un motif magnétique (10) à partir d'une paire de pôles Nord et Sud dont la transition est différente de la transition entre chaque pôle Nord et Sud de l'anneau (1), et dont la largeur angulaire du pôle Nord est d'une part égale à celle du pôle Sud au niveau de la piste principale (4) et d'autre part différente au niveau de la piste de référence "top tour" (5), les deux pistes (4) et (5) étant elles-mêmes situées sur l'anneau multipolaire (1).

2. Capteur numérique selon la revendication 1, **caractérisé en ce que** la transition (3) entre les pôles Nord et Sud du motif magnétique (10) est un segment de droite, incliné d'un angle (α) par rapport à la direction des transitions entre les pôles Nord et Sud des autres paire de l'anneau multipolaire (1), le centre (R) de la rotation d'angle (α) se trouvant sur la piste principale (4).

3. Capteur numérique selon la revendication 1, **caractérisé en ce que** la transition (3) entre les pôles Nord et Sud du motif magnétique (10) est composée de deux segments de droite, un premier segment (31) selon un rayon de l'anneau magnétique (1) qui divise le motif en deux parties égales pour conserver une largeur de pôle angulaire constante au niveau de la piste principale (4) et un second segment (32) incliné d'un angle (β) par rapport au premier segment au niveau de la piste de référence (5).

4. Capteur numérique selon la revendication 1, **caractérisé en ce que** la transition (3) entre les pôles Nord et Sud du motif magnétique (10) est composée de deux segments de droite (33 et 34), dont l'un (33) est confondu avec un rayon (r) de l'anneau magnétique (1) divisant le motif (10) en deux parties égales et dont l'autre (34) est confondu avec un rayon (r'), décalé d'un angle (δ) par rapport au rayon (r), divisant le motif (10) en deux parties inégales.

5. Capteur numérique selon la revendication 4, **caractérisé en ce que** ces deux segments de droite (33 et 34) sont reliés par un arc de cercle.

6. Capteur numérique selon la revendication 4, **caractérisé en ce que** les segments de droite (33 et 34), situés au niveau des deux pistes magnétiques (4 et 5), sont reliés au niveau du milieu de l'anneau multipolaire (1) par une boucle (35) destinée à atténuer les influences magnétiques entre les pistes.

7. Capteur numérique selon la revendication 4, **caractérisé en ce que** les segments de droite (33 et 34), situés au niveau des deux pistes magnétiques (4 et 5), sont reliés au niveau du milieu de l'anneau multipolaire (1) par une boucle (36) en forme de S au niveau du milieu de l'anneau.

8. Capteur numérique selon l'une des revendications 1 à 7, **caractérisé en ce que** le profil d'aimantation de l'anneau magnétique multipolaire (1), le long d'un rayon au centre d'un pôle, possédant un plateau (18) et deux décroissances (19) vers les diamètres intérieur et extérieur de l'anneau, la longueur du plateau doit être au moins égale à la somme de la distance (d), entre les éléments sensibles du capteur situés en regard respectivement de la piste principale et de la piste de référence, et la tolérance de positionnement (2T) sur un rayon de l'anneau par rapport aux deux pistes magnétiques.

9. Capteur numérique selon l'une des revendications 1 à 8, **caractérisé en ce que** le capteur magnétique (11) est composé de trois éléments sensibles, dont le premier (7) est situé en regard de la piste de référence (5) et dont les deux autres (61 et 62) sont situés en regard de la piste magnétique principale (4) de telle sorte que l'un des deux (61) est situé sur le même rayon de l'anneau magnétique que l'élément sensible (7) de la piste de référence à une distance (d) et qu'ils sont décalés l'un par rapport à l'autre le long de la piste principale (4) afin de délivrer des signaux respectifs en quadrature, soit, lorsqu'un de ces éléments est situé en face d'une transition magnétique entre deux pôles Nord et Sud, l'autre élément est situé au milieu d'un pôle magnétique.

10. Capteur numérique selon l'une des revendications 1 à 8, le capteur magnétique (11) est composé de deux barrettes d'éléments magnétiques sensibles (20 et 21), situées en regard des deux pistes magnétiques principale (4) et de référence "top tour" (5), sont parallèles et distantes d'une longueur (d), et sont composées d'une pluralité d'éléments sensibles (20ᵢ et 21ᵢ) respectifs, i étant un nombre entier positif, de préférence pair et égal pour les deux barrettes, chaque élément sensible d'une barrette étant situé en regard d'un élément sensible de l'autre barrette.

11. Capteur numérique selon la revendication 1, **caractérisé en ce que** le dispositif de traitement électronique des signaux (S₆ et S₇) issus des deux éléments sensibles du capteur magnétique (11) comprend:
- un circuit différentiateur (8), effectuant la différence analogique entre les signaux d'entrée (S₆ et S₇), pour délivrer un signal analogique de référence "top tour" (S_{TT});
- un circuit comparateur (9), destiné à comparer ledit signal analogique de référence (S_{TT}) à un seuil fixe de référence (S_{SE}), compris entre les limites supérieure et inférieure du signal (S_{TT}), et générant un signal numérique (C) de référence "top tour", qui sert d'impulsion de référence.

12. Capteur numérique selon les revendications 1 et 9, **caractérisé en ce que** le dispositif de traitement électronique des signaux issus des trois éléments sensibles (7, 61, 62) du capteur magnétique (11) comprend:
- un circuit différentiateur (80), destiné à effectuer la différence analogique entre le signal (S₆₁) émis par l'élément capteur (6) de la piste principale (4) et le signal (S₇) émis par l'élément capteur (7) de la piste de référence (5) et situé sur le même rayon de l'anneau (1) que lui, et délivrant un signal analogique (S_{TT}) de référence "top tour";
- un premier circuit comparateur (91), comparant le signal (S₆₂) de l'élément sensible (62) en quadrature avec l'élément (61), avec le signal analogique "top tour" (S_{TT}), pour délivrer un signal numérique (D₁) qui est à l'état logique 1 quand le signal (S₆₂) est supérieur au signal (S_{TT}) et à l'état 0 inversement;
- un second circuit comparateur (92), comparant ce même signal (S₆₂) avec le signal (S₆₁) émis par l'autre élément sensible (61), pour délivrer un signal numérique (D₂), qui est à l'état logique 1 quand le signal (S₆₂) est supérieur au signal (S₆₁) et à l'état 0 inversement;
- un détecteur de front descendant (13) relié au comparateur (92), dont le signal (D₃) de sortie génère une impulsion à chaque front descendant de signal logique (D₂);
- une porte logique ET (14), recevant en entrée les signaux binaires (D₁ et D₃) pour générer un signal numérique (D₄) constitué d'une impulsion unique (16) par tour de l'anneau magnétique multipolaire (1), apparaissant toujours à la même position par rapport à l'anneau;
- un circuit de synchronisation (15), recevant en entrée le signal numérique (D₄) ainsi que les signaux (A et B) et générant le signal numérique de référence "top tour" (C).

13. Capteur numérique selon les revendications 1 et 10, **caractérisé en ce que** le dispositif de traitement électronique des signaux issus des deux barrettes d'éléments sensibles (20 et 21) comprend :
- des moyens de sommation analogique (22) de la première moitié des signaux issus de la barrette (20), référencés [S₂₀₍₁₎ à S₂₀₍ₙ₎], délivrant un signal analogique (E₁);
- des moyens de sommation analogique (23) de la seconde moitié des signaux issus de cette même barrette (20), référencés [S₂₀₍ₙ₊₁₎ à S_{20 (2n)}], délivrant un autre signal analogique (E₂);
- des moyens de sommation analogique (24) des signaux issus de la seconde barrette (21), délivrant un troisième signal analogique (E₃);
- un circuit de sommation analogique (25) des signaux (E₁ et E₂), issus des sommateurs (22 et 23), qui délivre un signal analogique (S_{SIN});
- un premier circuit différentiateur analogique (81), effectuant la différence des signaux (E₁ et E₂) issus des sommateurs (22 et 23) pour délivrer un signal analogique (S_{COS});
- un deuxième circuit différentiateur (82), effectuant la différence entre le signal (S_{SIN}) et le signal (E₃) issus respectivement des sommateurs (25 et 24) pour délivrer le signal analogique (S_{TT}) de référence "top tour";
- un premier comparateur (93), comparant le signal (S_{COS}) issu du différentiateur (81) avec le signal analogique "top tour" (S_{TT}) pour délivrer un signal numérique (D₁) qui est à l'état logique 1 quand le signal (S_{COS}) est supérieur à (S_{TT}) et à l'état 0 inversement;
- un deuxième comparateur (94), comparant ce même signal (S_{COS}) avec le signal (S_{SIN}) issu du sommateur (25), pour délivrer un signal numérique (D₂), égal à 1 quand le signal (S_{COS}) est supérieur à (S_{SIN}) et égal à 0 inversement;
- un détecteur de front descendant (13), relié au deuxième comparateur, générant une impulsion (D₃) à chaque front descendant du signal logique (D₂);
- une porte logique ET (14), recevant les signaux binaires (D₁ et D₃), générant un signal numérique (D₄) sous forme d'une impulsion unique (16) par tour de l'anneau magnétique 1;
- un circuit de synchronisation (15) recevant cette impulsion unique (16) par tour, ainsi que les signaux (A et B), pour générer le signal de sortie "top tour" (C).

14. Capteur numérique selon les revendications 1 et 10, **caractérisé en ce que** les éléments sensibles du capteur (6, 7, 61 et 62) et les barrettes (20 et 21) d'éléments sensibles sont du type sonde à effet Hall.

15. Capteur numérique selon les revendications 1 et 10, **caractérisé en ce que** les éléments sensibles du capteur (6, 7, 61 et 62) et les barrettes (20 et 21) d'éléments sensibles sont du type sonde magnétorésistive amorphe.

16. Capteur numérique selon les revendications 1 et 10, **caractérisé en ce que** les éléments sensibles du capteur (6, 7, 61 et 62) et les barrettes (20 et 21) d'éléments sensibles sont du type sonde magnétorésistive géante.

## Patentansprüche

1. Digitaler relativer Positionssensor, umfassend einerseits einen kreisförmigen multipolaren magnetischen Ring, auf welchem eine Vielzahl von Paaren von Nord- und Südpolen aufmagnetisiert sind, gleichverteilt, von konstanter bestimmter Winkelgröße, in Rotation beweglich gegenüber einem festen magnetischen Sensor, bestehend aus wenigstens zwei empfindlichen Elementen, gelegen auf einem gleichen Radius des Rings und entfernt um eine Länge (d), jeweils positioniert in Bezug auf eine Hauptspur und eine Bezugsspur "Top Tour" und andererseits aus einer Vorrichtung zur Verarbeitung von Ausgangssignalen, die durch die empfindlichen Elemente ausgegeben werden, dazu bestimmt, einen Referenzimpuls zu geben pro Umdrehung eines Elements, das in Rotation fest verbunden ist mit dem multipolaren Ring, **dadurch gekennzeichnet, dass** auf dem multipolaren Ring (1) ein magnetisches Muster (10) verwirklicht ist, ausgehend von einem Paar von Polen Nord und Süd, deren Transition unterschiedlich ist zu der Transition zwischen jedem Pol Nord und Süd des Ringes (1), und dessen Winkelgröße des Nordpols einerseits gleich zu der des Südpols ist auf Höhe der Hauptspur (4) und andererseits unterschiedlich auf Höhe der Referenzspur "Top Tour" (5), wobei die zwei Spuren (4) und (5) selber auf dem multipolaren Ring (1) gelegen sind.

2. Digitalsensor nach Anspruch 1, **dadurch gekennzeichnet, dass** die Transition (3) zwischen den Polen Nord und Süd des magnetischen Musters (10) ein Geradenabschnitt ist, geneigt um einen Winkel (α) im Verhältnis zur Richtung der Transitionen zwischen den Polen Nord und Süd anderer Paare des multipolaren Rings (1), wobei die Mitte (R) der Winkelrotation (α) sich auf der Hauptspur (4) befindet.

3. Digitalsensor nach Anspruch 1, **dadurch gekennzeichnet, dass** die Transition (3) zwischen den Polen Nord und Süd des magnetischen Musters (10) zusammengesetzt ist aus zwei Geradenabschnitten, einem ersten Abschnitt (3 1) gemäß einem Radius des magnetischen Rings (1), der das Muster in zwei gleiche Teile unterteilt, um eine konstante Pol-Winkelgröße zu bewahren auf Höhe der Hauptspur (4), und einem zweiten Abschnitt (32), geneigt um einen Winkel (β) im Verhältnis zum ersten Abschnitt auf Höhe der Referenzspur (5).

4. Digitalsensor nach Anspruch 1, **dadurch gekennzeichnet, dass** die Transition (3) zwischen den Polen Nord und Süd des magnetischen Musters (10) zusammengesetzt ist aus zwei Geradenabschnitten (33 und 34), von denen der eine (33) in einen Radius (R) des magnetischen Rings (1) übergeht, welcher das Muster (10) in zwei gleiche Teile teilt und von denen der andere (34) in einen Radius (R') übergeht, verschoben um einen Winkel (δ) im Verhältnis zum Radius (R), wobei er das Muster (10) in zwei ungleiche Teile teilt.

5. Digitalsensor nach Anspruch 4, **dadurch gekennzeichnet, dass** die zwei Geradenabschnitte (33 und 34) durch einen Kreisbogen verbunden sind.

6. Digitalsensor nach Anspruch 4, **dadurch gekennzeichnet, dass** die zwei Geradenabschnitte (33 und 34), gelegen auf Höhe der zwei magnetischen Spuren (4 und 5) auf Höhe der Mitte des multipolaren Rings (1) durch eine Schleife (35),welche dazu bestimmt ist, die magnetischen Einflüsse zwischen den Spuren zu dämpfen, verbunden sind.

7. Digitalsensor nach Anspruch 4, **dadurch gekennzeichnet, dass** die Geradenabschnitte (33 und 34), gelegen auf Höhe der zwei magnetischen Spuren (4 und 5), verbunden sind auf Höhe der Mitte des multipolaren Rings (1) durch eine Schlaufe (36) in S-Form auf Höhe der Mitte des Rings.

8. Digitalsensor nach einem der Ansprüche 1 bis 7, **dadurch gekennzeichnet, dass** das Magnetisierungsprofil des multipolaren magnetischen Rings (1), entlang eines Radius in der Mitte eines Pols, welches ein Plateau (18) und zwei Abnahmen (19) hin zu dem inneren und dem äußeren Durchmesser besitzt, die Länge des Plateaus muss mindestens gleich der Summe der Distanz (d) zwischen den empfindlichen Elementen des Sensors, welche mit Bezug zur Hauptspur bzw. zur Referenzspur befindlich sind, und der Positioniertoleranz (2T) auf einem Radius des Rings im Verhältnis zu zwei magnetischen Spuren.

9. Digitalsensor nach einem der Anspruch 1 bis 8, **dadurch gekennzeichnet, dass** der magnetische Sensor (11) aus drei empfindlichen Elementen zusammengesetzt ist, von denen das erste (7) sich mit Bezug auf die Referenzspur (5) befindet und von denen die zwei anderen (61 und 62) sich mit Bezug auf die magnetische Hauptspur (4) befinden, derart, dass einer der zwei (61) sich auf demselben Radius des magnetischen Rings befindet wie das empfindliche Element (7) der Referenzspur mit einer Distanz (d) und dass sie zueinander verschoben sind entlang der Hauptspur (4), um jeweilige Signale in Quadratur abzugeben, das heißt, wenn eines dieser Elemente sich gegenüber einer magnetischen Transition zwischen zwei Polen Nord und Süd befindet, befindet sich das andere Element in der Mitte eines magnetischen Pols.

10. Digitalsensor nach einem der Ansprüche 1 bis 8, der magnetische Sensor (11) besteht aus zwei Stegen empfindlicher magnetischer Elemente (20 und 21), die sich mit Bezug auf die zwei magnetischen Spuren, Hauptspur (4) und Referenzspur "Top Tour" (5), befinden, sind parallel und beabstandet um eine Länge (d) und bestehen jeweils aus einer Vielzahl empfindlicher Elemente (20ᵢ und 21ᵢ), wobei i eine ganze positive Zahl ist, vorzugsweise geradzahlig und gleich für die zwei Stege, wobei jedes empfindliche Element eines Steges sich mit Bezug auf ein empfindliches Element des anderen Steges befindet.

11. Digitalsensor nach Anspruch 1, **dadurch gekennzeichnet, dass** die Vorrichtung zur elektronischen Verarbeitung der Signale (S₆ und S₇), die von zwei empfindlichen Elementen des magnetischen Sensors (11) stammen, umfasst:
- eine Differenzierschaltung (8), welche die analoge Differenz zwischen den Eingangssignalen (S₆ und S₇) bewirkt, um ein analoges Referenzsignal "Top Tour" (S_{TT}) auszugeben;
- eine Vergleichsschaltung (9), dazu bestimmt, das analoge Referenzsignal (S_{TT}) mit einer festen Referenzschwelle (S_{SE}) zu vergleichen, zwischen den oberen und unteren Grenzen des Signals (S_{TT}) gelegen, und welche ein digitales Referenzsignal (C) "Top Tour" erzeugt, welches als Referenzimpuls dient.

12. Digitalsensor gemäß den Ansprüchen 1 und 9, **dadurch gekennzeichnet, dass** die Vorrichtung zur elektronischen Verarbeitung der von den drei empfindlichen Elementen (7, 61, 62) des magnetischen Sensors (11) abgegebenen Signale umfasst:
- eine Differenzierungsschaltung (80); dazu bestimmt, die analoge Differenz zwischen dem Signal (S₆₁), ausgegeben durch das Sensorelement (6) der Hauptspur (4), und dem Signal (S₇), ausgegeben durch das Sensorelement (7) der Referenzspur (5) und auf dem gleichen Radius des Rings (1) gelegen wie dieser, und welche ein analoges Referenzsignal (S_{TT}) "Top Tour" abgibt;
- eine erste Vergleichsschaltung (91),welche das Signal (S₆₂) des empfindlichen Elements (62) in Quadratur mit dem Element (61) vergleicht mit dem analogen Signal "Top Tour" (S_{TT}), um ein Digitalsignal (D₁) abzugeben, das im Zustand logisch 1 ist, wenn das Signal (S₆₂) größer ist als das Signal (S_{TT}) und im Zustand 0 im umgekehrten Fall,
- eine zweite Vergleichsschaltung (92), welche das gleiche Signal (S₆₂) mit dem Signal (S₆₁) vergleicht, das durch das andere empfindliche Element (61) ausgegeben ist, um ein Digitalsignal (D₂) abzugeben, das im Zustand logisch 1 ist, wenn das Signal (S₆₂) größer als das Signal (S₆₁) ist, und im Zustand 0 im umgekehrten Fall;
- einen Detektor einer fallenden Flanke (13), verbunden mit dem Vergleicher (92), dessen Ausgangssignal (D₃) einen Puls erzeugt bei jeder fallenden Flanke des logischen Signals (D₂);
- ein logisches Gatter ET (14), welches im Eingang die binären Signale (D₁ und D₃) empfängt, um ein Digitalsignal (D₄) zu erzeugen, welches einen einzigartigen Puls (16) pro Umdrehung des multipolaren magnetischen Rings (1) bildet, welches immer an der gleichen Position im Verhältnis zum Ring erscheint;
- eine Synchronisationsschaltung (15), welche am Eingang das digitale Signal (D₄) empfängt, sowie die Signale (A und B) und das digitale Referenzsignal "Top Tour" (C) erzeugt.

13. Digitalsensor nach den Ansprüchen (1) und (10), **dadurch gekennzeichnet, dass** die Vorrichtung zur elektronischen Verarbeitung der von den zwei Stegen empfindlicher Elemente (20 und 21) ausgegebenen Signale umfasst:
- Mittel zur analogen Summierung (22) der ersten Hälfte der vom Steg (20) ausgegebenen Signale, bezeichnet [S₂₀₍₁₎ bis S₂₀₍ₙ₎], wobei es ein analoges Signal (E₁) ausgibt;
- Mittel zur analogen Summierung (23) der zweiten Hälfte der von diesem gleichen Steg (20) ausgegebenen Signale, bezeichnet [S₂₀₍ₙ₊₁₎ bis S₂₀₍₂ₙ₎], wobei es ein anderes analoges Signal (E₂) ausgibt;
- Mittel zur analogen Summierung (24) der von dem zweiten Steg (21) ausgegebenen Signale, wobei es ein drittes analoges Signal (E₃) ausgibt;
- analoge Summierschaltung (25) von Signalen (E₁ und E₂), ausgegeben von Summieren (22 und 23), welche ein Analogsignal liefert (S_{SIN});
- eine erste analoge Differenzierungsschaltung (81), welche die Differenz der von den Summierern (22 und 23) ausgegebenen Signale (E₁ und E₂) ausführt, um ein analoges Signal (S_{COS}) auszugeben;
- eine zweite Differenzierungsschaltung (82), welche die Differenz zwischen dem Signal (S_{SIN}) und dem Signal (E₃) ausführt, jeweils von den Summierern (25 und 24) ausgegeben, um das analoge Referenzsignal (S_{TT}) "Top Tour" auszugeben;
- einen ersten Vergleicher (93), welcher das von dem Differenzierer (81) ausgegebene Signal (S_{COS}) mit dem analogen Signal "Top Tour" (S_{TT}) vergleicht, um ein Digitalsignal (D₁) auszugeben, das im Zustand logisch 1 ist, wenn das Signal (S_{COS}) größer als (S_{TT}) ist, und im Zustand 0 im umgekehrten Fall;
- einen zweiten Vergleicher (94), welcher dasselbe Signal (S_{COS}) mit dem Signal (S_{SIN}) vergleicht, das von dem Summierer (25) ausgegeben wird, um ein Digitalsignal (D₂) zu liefern, gleich 1, wenn das Signal (Scos) größer als (S_{SIN}) ist, und 0 im umgekehrten Fall;
- einen Detektor für fallende Flanken (13), verbunden mit dem zweiten Vergleicher, welcher einen Impuls (D₃) bei jeder fallenden Flanke des logischen Signals (D₂) liefert;
- ein logisches Gatter ET (14), welches die binären Signale (D₁ und D₃) empfängt, welches ein Digitalsignal (D₄) in Form eines einzigartigen Impulses (16) pro Umdrehung des magnetischen Rings (1) erzeugt;
- eine Synchronisationsschaltung (15), welche diesen einzigartigen Impuls (16) pro Umdrehung empfängt, sowie die Signale (A und B), um das Ausgangssignal "Top Tour" (C) zu erzeugen.

14. Digitalsensor nach den Ansprüchen 1 und 10, **dadurch gekennzeichnet, dass** die empfindlichen Elemente des Sensors (6, 7, 61 und 62) und die Stege (20 und 21) von empfindlichen Elementen vom Typ Hall-Effektsonde sind.

15. Digitalsensor nach den Ansprüchen 1 und 10, **dadurch gekennzeichnet, dass** die empfindlichen Elemente des Sensors (6, 7, 61 und 62) und die Stege (20 und 21) von empfindlichen Elementen vom Typ amorphe magnetoresistive Sonde sind.

16. Digitalsensor nach den Ansprüchen 1 und 10, **dadurch gekennzeichnet, dass** die empfindlichen Elemente des Sensor (6, 7, 61 und 62) und die Stege (20 und 21) empfindliche Elemente vom Typ riesenmagnetoresistive Sonde sind.

## Claims

1. A digital relative position sensor comprising on the one hand a circular multipolar magnetic ring on which are magnetized a plurality of pairs of north and south poles, equally distributed, of constant determined angular width, mobile in rotation opposite a stationary magnetic sensor comprised of at least two sensing elements, which are situated on the same radius of the ring and a length (d) apart, respectively positioned facing a main track and a "revolution pulse" reference track, and on the other hand a device for processing output signals emitted by the sensing elements, intended to provide one reference pulse per revolution of a component in rotation attached to the multipolar ring, **characterized in that**, on the multipolar ring (1), a magnetic pattern (10) is produced from a pair of north and south poles whose transition is different from the transition between each north and south pole of the ring (1), and of which the angular width of the north pole is on the one hand equal to that of the south pole at the main track (4), and on the other hand, different at the "revolution pulse" reference track (5), the two tracks (4) and (5) themselves being situated on the multipolar ring (1).

2. A digital sensor according to claim 1, **characterized in that** the transition (3) between the north and south poles of the magnetic pattern (10) is a line segment, inclined at an angle (α) with respect to the direction of the transitions between the north and south poles of the other pairs of the multipolar ring (1), the centre (R) of the rotation of angle (α) being situated on the main track (4).

3. A digital sensor according to claim 1, **characterized in that** the transition (3) between the north and south poles of the magnetic pattern (10) is composed of two line segments, a first segment (31) directed along a radius of the magnetic ring (1) which divides the pattern into two equal parts in order to maintain a constant angular pole width at the main track (4), and a second segment (32) inclined at an angle (β) with respect to the first segment at the reference track (5).

4. A digital sensor according to claim 1, **characterized in that** the transition (3) between the north and south poles of the magnetic pattern (10) is composed of two line segments (33 and 34), one of which (33) is directed along a radius (r) of the magnetic ring (1), dividing the pattern (10) into two equal parts, and the other of which (34) is directed along a radius (r'), offset by an angle (δ) with respect to the radius (r), dividing the pattern (10) into two unequal parts.

5. A digital sensor according to claim 4, **characterized in that** these two line segments (33 and 34) are connected by an arc of a circle.

6. A digital sensor according to claim 4, **characterized in that** the line segments (33 and 34), situated at the two magnetic tracks (4 and 5), are connected at the middle of the multipolar ring (1) by a curved line segment (35) intended to attenuate magnetic influences between the tracks.

7. A digital sensor according to claim 4, **characterized in that** the line segments (33 and 34), situated at the two magnetic tracks (4 and 5), are connected at the middle of the multipolar ring (1) by a curved line segment (36) in the shape of an S at the middle of the ring.

8. A digital sensor according to one of claims 1 to 7, **characterized in that** the magnetization profile of the multipolar magnetic ring (1) having, along a radius at the centre of a pole, a plateau region (18) and two regions (19) which decrease towards the interior and exterior diameters of the ring, the length of the plateau region must be at least equal to the sum of the distance (d), between the sensing elements of the sensor respectively facing the main track and the reference track, and the positioning tolerance (2T) on a radius of the ring, with respect to the two magnetic tracks.

9. A digital sensor according to one of claims 1 to 8, **characterized in that** the magnetic sensor (11) is composed of three sensing elements, the first of which (7) faces the reference track (5) and the two others (61 and 62) face the main magnetic track (4) in such a way that one (61) of the two is on the same radius of the magnetic ring as the sensitive element (7) of the reference track at a distance (d), and they are offset in relation to one another along the main track (4) so as to deliver respective signals in quadrature, namely, when one of these elements faces a magnetic transition between two north and south poles, the other element is situated in the middle of a magnetic pole.

10. A digital sensor according to one of claims 1 to 8, the magnetic sensor (11) is composed of two bars of sensitive magnetic elements (20 and 21), facing the two main (4) and "revolution pulse" reference (5) magnetic tracks, are parallel and a length (d) apart, and are composed of a plurality of respective sensing elements (20ᵢ and 21ᵢ), i being a positive whole number, preferably even and equal for the two bars, each sensitive element of one bar facing a sensitive element of the other bar.

11. A digital sensor according to claim 1, **characterized in that** the device for the electronic processing of the signals (S₆ and S₇) coming from the two sensing elements of the magnetic sensor (11) includes:
- a differentiating circuit (8), which executes the analogue difference between input signals (S₆ and S₇) in order to deliver an analogue "revolution pulse" reference signal (S_{TT});
- a comparator circuit (9) intended to compare said analogue reference signal (S_{TT}) with a set reference threshold (S_{SE}), comprised between the upper and lower limits of the signal (S_{TT}) and which generates a digital "revolution pulse" reference signal (C), which is used as a reference pulse.

12. A digital sensor according to claims 1 and 9, **characterized in that** the device for the electronic processing of the signals coming from the three sensing elements (7, 61, 62) of the magnetic sensor (11) comprises:
- a differentiating circuit (80), intended to execute the analogue difference between the signal (S₆₁) emitted by the sensor element (6) of the main track (4) and the signal (S₇) emitted by the sensor element (7) of the reference track (5) and situated on the same radius of the ring (1) as it, and delivering an analogue "revolution pulse" reference signal (S_{TT});
- a first comparator circuit (91), which compares the signal (S₆₂) of the sensitive element (62) in quadrature with the element (61), with the analogue "revolution pulse" signal (S_{TT}), in order to deliver a digital signal (D₁) which is in logic state 1 when the signal (S₆₂) is greater than the signal (S_{TT}) and in state 0 when the opposite is true;
- a second comparator circuit (92) which compares this same signal (S₆₂) with the signal (S₆₁) emitted by the other sensitive element (61), in order to deliver a digital signal (D₂), which is in logic state 1 when the signal (S₆₂) is greater than the signal (S₆₁) and in state 0 when the opposite is true;
- a descending front detector (13) connected to the comparator (92) whose output signal (D₃) generates a pulse with each descending front of logic signal (D₂);
- a logic gate ET (14), which receives, as input, the binary signals (D₁ and D₃) in order to generate a digital signal (D₄) consisting of a single pulse (16) per revolution of the multipolar magnetic ring (1), always appearing in the same position with respect to the ring;
- a synchronization circuit (15), which receives, as input, the digital signal (D₄) as well as the signals (A and B) and generating the digital "revolution pulse" reference signal (C).

13. A digital sensor according to claims 1 to 10, **characterized in that** the device for the electronic processing of the signals coming from the two bars of sensing elements (20 and 21) comprises:
- means (22) for the analogue summing of the first half of the signals coming from the bar (20), which are referenced [S₂₀₍₁₎ to S₂₀₍ₙ₎], delivering an analogue signal (E₁);
- means (23) for the analogue summing of the second half of the signals coming from this same bar (20), which are referenced [S₂₀₍ₙ₊₁₎ to S₂₀₍₂ₙ₎], delivering another analogue signal (E₂);
- means (24) for the analogue summing of the signals coming from the second bar (21) which deliver third analogue signal (E₃);
- an analogue circuit (25) for summing the signals (E₁ and E₂) coming from the summing means (22 and 23), which delivers an analogue signal (S_{SIN});
- a first analogue differentiating circuit (81), which executes the difference between signals (E₁ and E₂) coming from the summing means (22 and 23) in order to deliver an analogue signal (S_{COS});
- a second differentiating circuit (82), which executes the difference between the signal (S_{SIN}) and the signal (E₃) respectively coming from the summing means (25 and 24) in order to deliver the analogue "revolution pulse" reference signal (S_{TT});
- a first comparator (93), comparing the signal (S_{COS}) coming from the differentiator (81) with the analogue "revolution pulse" signal (S_{TT}) in order to deliver a digital signal (D₁) which is in the logic state 1 when the signal (S_{COS}) is greater than (S_{TT}) and in the state 0 when the opposite is true;
- a second comparator (94), comparing this same signal (S_{COS}) with the signal (S_{SIN}) coming from the summing means (25), in order to deliver a digital signal (D₂), equal to 1 when the signal (S_{COS}) is greater than (S_{SIN}) and equal to 0 when the opposite is true;
- a descending front detector (13), connected to the second comparator, generating a pulse (D₃) with each descending front of the logic signal (D₂);
- a logic gate ET (14), which receives the binary signals (D₁ and D₃), generating a digital signal (D₄) in the form of a single pulse (16) per revolution of the magnetic ring 1;
- a synchronization circuit (15) receiving this single pulse (16) per revolution, as well as the signals (A and B), in order to generate the "revolution pulse" output signal (C).

14. A digital sensor according to claims 1 and 10, **characterized in that** the sensing elements of the sensor (6, 7, 61 and 62) and the bars (20 and 21) of sensing elements are of the Hall-effect probe type.

15. A digital sensor according to claims 1 and 10, **characterized in that** the sensing elements of the sensor (6, 7, 61 and 62) and the bars (20 and 21) of sensing elements are of the amorphous magneto-resistant probe type.

16. A digital sensor according to claims 1 and 10, **characterized in that** the sensing elements of the sensor (6, 7, 61 and 62) and the bars (20 and 21) of sensing elements are of the giant magneto-resistant probe type.
